(19) Europäisches Patentamt
European Patent Office
Office européen des brevets

(11) EP 4 280 332 A1

(12) EUROPEAN PATENT APPLICATION

(43) Date of publication:
**22.11.2023 Bulletin 2023/47**

(21) Application number: **23173490.6**

(22) Date of filing: **15.05.2023**

(51) International Patent Classification (IPC):
***H01M 10/0525*** *(2010.01)* ***H01M 10/0565*** *(2010.01)*
***H01M 10/0566*** *(2010.01)*

(52) Cooperative Patent Classification (CPC):
**H01M 10/0565; H01M 10/0525; H01M 10/0566;**
H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.05.2022 US 202263364808 P**

(71) Applicant: **Kraton Polymers Nederland B.V.**
**1322 CE Almere (NL)**

(72) Inventors:
- **KRUTZER, Bert**
  **Houston, Texas 77084 (US)**
- **YAN, Jiaqi**
  **Houston, Texas 77084 (US)**
- **MHETAR, Vijay**
  **Houston, Texas 77084 (US)**
- **TOCCHETTO, Roger**
  **Houston, Texas 77084 (US)**
- **WILLIS, Carl**
  **Houston, Texas 77084 (US)**

(74) Representative: **Henkel & Partner mbB**
**Patentanwaltskanzlei, Rechtsanwaltskanzlei**
**Maximiliansplatz 21**
**80333 München (DE)**

# (54) POLYELECTROLYTE COMPOSITION AND METHODS OF PREPARATION THEREOF

(57) A polyelectrolyte composition is disclosed comprising (a) a polyionic multiblock polymer (PILSBC) comprising a styrenic block copolymer (SBC) precursor having at least a quaternary ammonium salt; (b) a cross-linking agent comprising a compound having at least two amino groups; (c) a lithium salt; and (d) an ionic liquid. The SBC precursor comprises at least a block D derived from a substituted vinyl aromatic monomer; a block A derived from a vinyl aromatic monomer; and optionally a block B derived from a conjugated diene monomer. The polyelectrolyte composition has a mol ratio of the ionic liquid to the quaternary ammonium salt of 0.1:1 - 1:1. The polyelectrolyte composition provides improved ionic conductivity and electrochemical properties, and can be used in batteries, e.g., a Li-ion battery.

EP 4 280 332 A1

## Description

## FIELD

The disclosure relates to a polyelectrolyte composition comprising a polyionic multiblock polymer, methods of preparation, and applications thereof.

## BACKGROUND

Lithium (Li) ion batteries have been widely used in various devices due to their multiple advantages. However, industries are still working on developing next generation Li-ion batteries with improved performance. One of the ways to improve the performance of Li-ion batteries is to use effective electrolytes, e.g., ionic liquids (ILs). ILs are attractive electrolytes having interesting properties, such as, for example, high ion conductivity, thermal stability, non-flammability, high heat capacity, negligible volatility at room temperature, strong polarizability, etc.

Polymers containing ILs or poly(ionic liquid)s (PILs) are a special type of polyelectrolytes which contain ILs associated with selected repeating units in the polymer chain. ILs are in a liquid state at room temperature, whereas PILs are solid and thus, can be made as polyelectrolytes having many advantages, e.g., no leakage, high (thermal) stability, cyclability (lifetime), overall storage capacity, etc.

Styrenic block copolymers (SBCs) are well known in the art and can be functionalized to modify their characteristics. Incorporation of ILs in selected blocks of the SBC can lead to the formation of polyelectrolytes. However, the performance of such polyelectrolytes depends on block contents of SBC, type of ILs, concentration of ions, etc.

There is still a need of a polyelectrolyte composition with improved ionic conductivity, mechanical, and electrochemical properties.

## SUMMARY

In one aspect, the disclosure relates to a polyelectrolyte composition comprises, consists essentially of, or consists of (a) a polyionic multiblock polymer containing a styrenic block copolymer precursor with at least a quaternary ammonium salt, the styrenic block copolymer precursor comprises: a block D derived from a substituted vinyl aromatic monomer, having a molecular weight ($M_p$) of 10 to 100 kg/mol, a block A derived from a vinyl aromatic monomer, having a molecular weight ($M_p$) of 5 to 100 kg/mol, and optionally a block B derived from a conjugated diene monomer, having a molecular weight ($M_p$) of 1 to 40 kg/mol; (b) a cross-linking agent comprising a compound having at least two amino groups, wherein the cross-linking agent is present in an amount of 0.05 to 20 mol%, based on total mol of the quaternary ammonium salt; (c) at least one salt selected from lithium salt, sodium salt, and mixtures thereof; and (d) an ionic liquid. A film obtained from the polyelectrolyte composition has an ionic conductivity at 30°C of greater than $2.0 \times 10^{-6}$ S $cm^{-1}$.

In a second aspect, the cross-linking agent is present in an amount of 0.1 to 15 mol%, based on total mol of the quaternary ammonium salt.

In a third aspect, the cross-linking agent is selected from the group consisting of 1,4-bis(imidazol-1-yl)-butane, 1,4-Bis(2-methyl-1H-imidazol-1-yl)butane, 1,4-bis(2-phenylimidazol)butane, 1,6-diimidazolehexane, 1,6-bis(2-ethylimidazolyl)butane, 1,6-bis(2-phenylimidazol)butane, 1,8-diimidazoleoctane, 1,8-bis(2-ethylimidazolyl)butane, 1,8-bis(2-phenylimidazol)butane, 1,10-diimidazoledecane, 1,10-bis(2-ethylimidazolyl)butane, and 1,10-bis(2-phenylimidazol)butane, and mixtures thereof.

In a fourth aspect, the polyelectrolyte composition has a conducting phase containing a combination of the lithium salt and the ionic liquid, and wherein a volume fraction of the conducting phase is 0.5 to 0.8, based on total volume of the polyelectrolyte composition.

## DESCRIPTION

The following terms will be used throughout the specification.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Polystyrene content" or PSC of a block copolymer refers to the weight % of vinyl aromatic, e.g., styrene in the block copolymer, calculated by dividing the sum of molecular weight of all vinyl aromatic units by the total molecular weight of the block copolymer. PSC can be determined using any suitable methodology such as proton nuclear magnetic

resonance (NMR).

"Molecular weight" refers to the polystyrene equivalent molecular weight in g/mol or kg/mol of a polymer block or a block copolymer. Molecular weight can be measured with gel permeation chromatography (GPC) using polystyrene calibration standards, such as is done according to ASTM 5296. The GPC detector can be an ultraviolet or refractive index detector or a combination thereof. The chromatograph is calibrated using commercially available polystyrene molecular weight standards. Molecular weight of polymers measured using GPC so calibrated are polystyrene equivalent molecular weights or apparent molecular weights. Molecular weight expressed herein is measured at the peak of the GPC trace and are commonly referred to as polystyrene equivalent "peak molecular weight," designated as $M_p$.

"Ionic liquid" or IL refers to a salt in the liquid state in which ions are poorly coordinated. Ionic liquids are also called liquid electrolytes, ionic melts, ionic fluids, fused salts, liquid salts, or ionic glasses.

"Ionic conductivity" refers to a measurement of a substance's tendency towards ionic conduction. This involves the movement of ions.

"Polyelectrolyte" refers to a polymer whose repeating units (some or all) bear an electrolyte group.

"Li-ion battery" refers to a lithium based energy storage system, but as used herein, the term also includes applications of other materials such as sodium, potassium, etc., for use in energy storage system. The term Li-ion battery can be interchangeably used as Li-ion cell or cell or coin cell.

"Constant current (CC) charging" refers to the use of a constant current to charge the battery for the whole charging process.

"Constant current constant voltage (CC-CV) charging" refers to the charging where a predetermined voltage is used to charge the battery followed by CC charging, e.g., 4.2 V for 1 hour used as formation prior to cycling.

"Charging capacity" refers to a capacity obtained by the constant current charging at a current value until a certain cell voltage is reached.

"Discharge capacity" refers to discharging of the cell at a current value until the cell voltage reaches a certain value.

The present disclosure relates to a polyelectrolyte composition comprising a polyionic multiblock polymer (PILSBC) containing a styrenic block copolymer (SBC) precursor having at least a quaternary ammonium salt, a cross-linking agent, an ionic liquid (IL), and a salt selected from lithium salt, sodium salt, and mixtures thereof. The polyelectrolyte composition provides improved ionic conductivity, electrochemical properties, and can be processed into thin films / membranes for use in batteries, e.g., a Li-ion battery.

(Polyionic Multiblock Polymer (PILSBC))

The PILSBC comprises a styrenic block copolymer (SBC) precursor having at least a quaternary ammonium salt (QAS), and a cross-linking agent with at least two amino groups. The SBC precursor can be any of linear or branched (multi-armed) block copolymer having at least a block D derived from a substituted vinyl aromatic monomer; a block A derived from a vinyl aromatic monomer; and optionally a polymer block B derived from a conjugated diene monomer.

In embodiments, the SBC precursor has a configuration selected from A-D, D-B, D-A-D, A-D-A, D-B-D, D-B-A, D-A-B, A-D-B, $(A-D)_nX$, $(D-B)_nX$, $(D-A-D)_nX$, $(A-D-A)_nX$, $(D-B-D)_nX$, $(D-B-A)_nX$, $(D-A-B)_nX$, $(A-D-B)_nX$, A-B-D, A-D-B, A-B-D-B', D-B-A-B', A-B-D-A, A-D-B-A, A-B-D-B'-A, A-D-B-D-A, A-B-A-D-A, A-D-A-B-A, A-B-D-B'-D, A-B-D-A-D, A-D-B-A-D, A-B-D-A-B', A-D-B-A-B', $(A-B-D)_nX$, $(A-D-B)_nX$, $(A-B-D-B')_nX$, $(A-B-D-A)_nX$, $(A-D-B-A)_nX$, $(B-A-B'-D)_nX$, and mixtures thereof, wherein X is a residue of a coupling agent, and n is from 2 to 30. Blocks B and B' are same or different and each independently derived from a conjugated diene monomer.

The SBC can be hydrogenated, unhydrogenated, partially hydrogenated or selectively hydrogenated. In embodiments, each vinyl aromatic monomer and substituted vinyl aromatic monomer is introduced or copolymerized into the diene block by any order and in any distribution to form any of configurations described above.

In embodiments, the substituted vinyl aromatic monomer has a substitution on any of ortho, meta, or para position of an aromatic ring. The substitution is at least one selected from the group consisting of alkyl, substituted alkyl, cycloalkyl, substituted cycloalkyl, heteroalkyl, substituted heteroalkyl, hetercycloalkyl, substituted heterocycloalkyl, aryl, substituted aryl, heteroaryl, substituted heteroaryl, and mixtures thereof.

In embodiments, the substituted vinyl aromatic monomer is selected from the group consisting of alkyl substituted styrene, ortho-alkyl substituted styrene, para-alkyl substituted styrene, ortho, para-dialkyl substituted styrene, and mixtures thereof. Examples of alkyl substituted styrene monomers include ortho-methyl styrene, ortho-ethyl styrene, ortho-n-propyl styrene, ortho-iso-propyl styrene, ortho-n-butyl styrene, ortho-iso-butyl styrene, ortho-sec-butyl styrene, ortho-tert-butyl styrene, ortho-decyl styrene, isomers of ortho-dodecyl styrene, para-methyl styrene, para-ethyl styrene, para-n-propyl styrene, para-iso-propyl styrene, para-n-butyl styrene, para-iso-butyl styrene, para-sec-butyl styrene, para-tert-butyl styrene, para-decyl styrene, isomers of para-dodecyl styrene, ortho,para-dimethyl styrene, ortho,para-diethyl styrene, ortho,para-di(n-propyl) styrene, ortho,para-di(iso-propyl) styrene, ortho,para-di(n-butyl) styrene, ortho,para-di(iso-butyl) styrene, ortho, para-di(sec-butyl) styrene, ortho, para-di(tert-butyl) styrene, ortho, para-didecyl styrene, isomers

of ortho, para-didodecyl styrene, isomers of vinyl toluene, vinyl xylene, 1,1-vinyl biphenyl, vinyl naphthalene, vinyl anthracene, and mixtures thereof.

In embodiments, the vinyl aromatic monomer is selected from the group consisting of styrene, alpha-methylstyrene, and mixtures thereof.

In embodiments, the conjugated diene monomer is selected from the group consisting of 1,3-butadiene, isoprene, 2,3-dimethyl-1,3-butadiene, 1-phenyl-1,3-butadiene, 1,3-pentadiene, 1,3-hexadiene, 3-butyl-1,3-octadiene, myrcene, farnesene, 1,3-cyclohexadiene, piperylene, and mixtures thereof.

In embodiments, each block A has a molecular weight ($M_p$) of 5 - 100, or 10 - 90, or 15 -80, or 5 - 50, or 10 - 50 kg/mol. In embodiments, each block B and B' independently has a molecular weight ($M_p$) of 1 - 40, or 2 - 35, or 5 - 30, or 5 - 25, 2 - 20, or > 2, or < 25 kg/mol. In embodiments, each block D has a molecular weight ($M_p$) of 10 - 100, or 10 - 90, or 15 -70, or 5 - 55, or 15 - 60 kg/mol.

In embodiments, the SBC precursor has a molecular weight ($M_p$) of 20 - 400, or 25 - 350, or 30 -300, or 35 - 250, or 40 - 200, 20 - 150, or 25 - 130, or 30 - 120, or 30 - 130 kg/mol.

In embodiments, the SBC precursor has a polystyrene content (PSC) of 5 - 70, or 5 - 50, or 5 - 40, or > 5, or < 75 wt.%, based on total weight of the SBC precursor.

In embodiments, each block B and B', before hydrogenation, has a vinyl content of 5 - 35, or 8 - 30, or 10 - 25, or 12 - 20, or > 10, or < 30 wt.%, based on weight of the polymerized conjugated diene monomer in each block B and B'.

In embodiments, each block A and D, is essentially left non-hydrogenated. Each block A and D can independently have a hydrogenation level of < 30, or < 20, or < 10, or < 5 mol%, based on mol of the polymerized monomer in each block A and D. In embodiments, each block B and B' is hydrogenated to a hydrogenation level of > 80, or > 85, or > 90, or > 95, or > 98, or > 99 or up to 100 mol%, based on total mol of the polymerized conjugated diene monomer in each block B and B'. The hydrogenation level refers to the % of original unsaturated bonds which become saturated upon hydrogenation, which can be determined using UV-VIS spectrophotometry and / or proton NMR and / or via ozonolysis titration.

In embodiments, the block D constitutes 10 - 70, or 15 - 65, or 20 - 55, or > 15, or < 60 wt.%; the block A constitutes 30 - 90, or 35 - 80, or 40 - 70, or 30 - 70, or > 25, or < 75 wt.%, based on total weight of the SBC precursor. In embodiments, combined blocks B and B', if present, constitute up to 20 wt.%, or 1 - 18, or 2 - 15, or > 1.5, or < 15 wt.%, based on total weight of the SBC precursor.

In embodiments, the QAS is bonded to at least one of the blocks A, B, and D. In embodiments, the block D has at least one QAS and each block A and B is substantially free of the QAS. In embodiments, the block B has at least one QAS and each block A and D is substantially free of the QAS. Alternatively, each block B and D has at least one QAS and the block A is substantially free of the QAS.

(Cross-linking Agent)

In embodiments, the cross-linking agent comprises a compound containing at least two amino groups.

In embodiments, the cross-linking agent is selected from the group consisting of 1,4-bis(imidazol-1-yl)-butane, 1,4-Bis(2-methyl-1H-imidazol-1-yl)butane, 1,4-bis(2-phenylimidazol)butane, 1,6-diimidazolehexane, 1,6-bis(2-ethylimidazolyl)butane, 1,6-bis(2-phenylimidazol)butane, 1,8-diimidazoleoctane, 1,8-bis(2-ethylimidazolyl)butane, 1,8-bis(2-phenylimidazol)butane, 1,10-diimidazoledecane, 1,10-bis(2-ethylimidazolyl)butane, and 1,10-bis(2-phenylimidazol)butane, and mixtures thereof.

Examples of cross-linking agents based on bi-imidazole include 2,2'-bis(o-chlorophenyl)-4,4',5,5'-tetraphenylbiimidazole, 2,2'-bis(o-fluorophenyl)-4,4',5,5'-tetraphenyl-biimidazole, 2,2'-bis(o-methylphenyl)-4,4',5,5'-tetraphenyl-biimidazole, 2,2'-bis(o-methoxyphenyl)-4,4',5,5'-tetraphenyl-biimidazole, 2,2'-bis(o-ethylphenyl)-4,4',5,5'-tetraphenyl-biimidazole, 2,2'-bis(p-methoxyphenyl)-4,4',5,5'-tetraphenyl-biimidazole, 2,2'-bis(2,2',4,4'-tetramethoxyphenyl)-4,4',5,5'-tetraphenyl-biimidazole, 2,2'-bis(2-chlorophenyl)-4,4',5,5'-tetraphenyl-biimidazole, 2,2'-bis(2,4-dichlorophenyl)-4,4',5,5'-tetraphenyl-biimidazole, and mixtures thereof.

Other cross-linking agents based on diamine can be used, e.g., diamine 4,4'-methylene-bis-(o-chloroaniline), dimethyl thio-toluene diamine, 3,5-diethyltoluene-2,4-diamine, 3,5-diethyltoluene-2,6-diamine, diethyl toluenediamine, methylenedianiline, di(4-aminocyclohexyl)methane, isophoronediamine, 1,3-xylylenediamine, diethylenetriamine, triethylenetetramine, 4-(4'-aminobenzyl)cyclohexylamine, hexamethylenediamine, [3-(trimethoxysilyl)propyl]-ethylenediamine, N,N'-dicinnamylidene-1,6-hexanediamine, 2-methyl-1,5-pentanediamine, 1,2-diaminocyclohexane, 1,4- or 1,3-diaminocyclohexane, 1,3-bis(aminomethyl)benzene, bis(4-aminocyclohexyl)methane, oligo(propylene oxide)diamine, ethylene diamine, 1,2- and 1,3-propylene diamine, trimethylene diamine, 1,2- and 1,4-butanediamine, hexamethylene diamine, decamethylene diamine, octamethylene diamine, p- and m-xylylene diamine, methylene dianiline, 2,4-toluenediamine, 2,6-toluenediamine, 3,3'-dimethyl-4,4'-diamino-dicyclohexyl methane, diethyl-2,4-toluenediamine, 4,4''-methylenebis-(3-chloro,2,6-diethyl)-aniline, 3,3'-dichlorobenzidene, 3,3'-dichloro-4,4'-diaminodiphenyl methane, N,N,N',N'-tetrakis(2-hydroxypropyl)ethylenediamine, 3,5-dimethylthio-2,4-toluenediamine, 3,5-dimethylthio-2,6-toluenediamine,

N,N'-dialkyldiamino diphenyl methane, trimethylene-glycol-di-p-aminobenzoate, polytetramethyleneoxide-di-p-aminobenzoate, 4,4'-methylene bis-2-chloroaniline, 2,2',3,3'-tetrachloro-4,4'-diamino-phenyl methane, p,p'-methylenedianiline, p-phenylenediamine, 4,4'-diaminodiphenyl, 2,4,6-tris(dimethylaminomethyl)phenol, 1-methyl-2,6-cyclohexyl diamine, 2,2,4- and 2,4,4-trimethyl-1,6-hexanediamine, 4,4'-bis-(sec-butylamino)-dicyclohexylmethane, 1,4-bis-(sec-butylamino)-cyclohexane, 1,2-bis-(sec-butylamino)-cyclohexane, derivatives of 4,4'-bis-(sec-butylamino)-dicyclohexylmethane, 4,4'-dicyclohexylmethane diamine, 1,4-cyclohexane-bis-(methylamine), 1,3-cyclohexane-bis-(methylamine), diethylene glycol bis-(aminopropyl)ether, 2-methylpentamethylene-diamine, diaminocyclohexane, dimethylamino propylamine, imido-(bis-propylamine), 3,5-dimethylthio-2,4-toluenediamine, 3,5-dimethylthio-2,6-toluenediamine, N,N'-dialkyldiamino diphenyl methane, trimethylene-glycol-di-p-aminobenzoate, polytetramethyleneoxide-di-p-aminobenzoate, N,N,N',N'-tetramethylaminoethane, N,N,N',N'-tetraethylaminoethane, N,N,N',N'-tetramethyl-1,3-propanediamine, N,N,N',N'-tetraethyl-1,3-propanediamine, N,N,N',N'-tetramethyl-1,4-butane diamine, N,N,N',N'-tetraethyl-1,4-butanediariine, N,N,N',N'-tetramethyl-2-butene-1,4-diamine, N,N,N',N'-tetraethyl-2-butene-1,4-diamine, 1,3-bis(dimethylamino)-2-propanol, 1,3-bis(diethylamino)-2-propanol, N,N,N',N'-tetramethyl-1,3-diaminobutane, N,N,N',N'-tetraethyl-1,3-diaminobutane, 1,3-di(4-pyridyl)propane, 4,4'-bipyridyl, 2,2'-bipyridyl, 1,4-diazabicyclo[2,2,2]octane, N,N'-dimethypiperazine, N,N'-dimethyl-1,3-di(4-piperidyl)propane, pyrazine, pyrazine amide, 4-(N,N'-dimethylamino)pyridine, N,N,N',N'-tetramethyl-1,5-pentanediamine, N,N,N',N'-tetraethyl-1,5-pentanediamine, N,N,N',N'-tetramethyl-1,6-hexanediamine, N,N,N',N'-tetraethyl-1,6-hexanediamine, 1,4-diaminobutane, 1,4-di(methylamino)butane, 1-dimethlyamino-4-aminobutane, ethylenediamine, trimethylhexamethylenediamine, polyetherdiamine, menthene diamine, bis(4-amino-3-methylcyclohexyl)methane, diaminodicyclohexylmethane, bisaminomethyl cyclohexane, 3,9-bis(3-aminopropyl)-2,4,8,10-tetraoxaspiro[5.5]undecane, meta-xylylenediamine, meta-phenylenediamine, diaminodiphenylmethane, diaminodiethyldiphenylmethane, N,N'-dimethylpiperazine, 1,4-diazadicyclo[2.2.2]octane, 1,8-diazabicyclo[5.4.0]-7-undecene, diethylaminopropylamine, trimethylhexamethylenediamine, polyetherdiamine, menthanediamine, 3,9-bis (3-aminopropyl) 2,4,8,10-tetraoxaspiro (5,5) undecane adduct, bis (4-amino-3-methylcyclohexyl) methane, bis (4-aminocyclohexyl) methane, 1,3-bis(aminomethyl)benzene, 4,4'-methylenedianiline, 1,3-phenylenediamine, 3,5-diethyl-2,4-toluenediamine, and mixtures thereof.

Examples of other amines as cross-linking agents include hexamethylenetetramine, triethylenetetramine, tetraethylenepentamine, tetraethylenepentamine, iminobispropylamine, bis(hexamethylene)triamine, 1,3,6-trisaminomethylhexane, diethylaminopropylamine, tetramethylguanidine, 2-(dimethylaminomethyl)phenol, 2,4,6-tris(dimethylaminomethyl)phenol, N2,N2,N4,N4,N6,N6-hexaallyl-1,3,5-triazine-2,4,6-triamine, N-aminoethyl piperazine, N-amino-N'-methylpiperazine, bis (hexamethylene) triamine, 1,3,6-trisaminomethylhexane, N-aminoethylpiperazine, pentaethylene hexamine, dipropylene triamine, tributylene tetramine, dihexamethylene triamine, mixed methylene bridged poly(cyclohexylaromatic)amine, triethylenetetramine, diethylenetriamine, triethylene tetramine, tris(2-aminoethyl)-amine, di(heptamethylene)triamine, tripropylene tetramine, tetraethylene pentamine, pentaethylenehexamine, di(trimethylene)triamine, polymethylene polyphenylpolyamine, diethylene triamine, diethylamino propylamine, and mixtures thereof.

In embodiments, the cross-linking agent has a general formula (I),

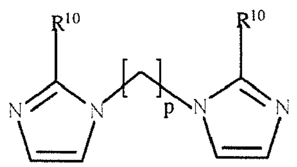

(I)

$R^{10}$ is a hydrogen atom, an aliphatic hydrocarbon of $C_1$ - $C_{10}$, a phenyl group, or a substituted phenyl group with substitution of $C_1$-$C_5$ hydrocarbon, and p is from 1 to 10.

In embodiments, the cross-linking agent is in amounts of 0.05 - 20, or 0.1 - 15, or 0.1 - 10, or 0.2 - 10, or 0.3 - 5, or 0.5 - 10, or < 10, or > 0.1 mol%, based on total mol of the QAS present in the SBC precursor.

(Methods of Preparation of PILSBC)

The PILSBC is prepared by first making the SBC precursor as disclosed in U.S. Patent No. 7449518. Typically, the SBC precursor is prepared by an anionic polymerization or by a sequential (or successive) polymerization of the monomers in solution in the presence of an initiator, followed by terminating the polymerized block copolymer chains. The polymerization of monomers can be performed by stepwise addition of monomers to the solution containing the initiator, followed by coupling of the resulting sequential block copolymer chains with the coupling agent (if present).

In embodiments, the process conditions for the sequential polymerization steps are similar to those used for anionic polymerizations, at a temperature of -30 to 150°C, or 10 to 100°C, or 30 to 90°C. The polymerization can be carried out in an inert atmosphere, e.g., nitrogen, or pressure in the range of 0.5 - 65 bars. The polymerization generally

requires < 12 hrs., or from 5 min. to 5 hrs., depending on factors including temperature, concentration of monomer components, the molecular weight of the target polymer, etc.

In embodiment, the coupling agent is selected from the group consisting of di- or multi-vinylarene compounds; di- or multi-epoxides; di- or multi-isocyanates; di- or multi-alkoxysilanes; di- or multi-imines; di-or multi-aldehydes; di- or multi-ketones; alkoxytin compounds; di- or multi-halides, such as silicon halides and halosilanes; mono-, di-, or multi-anhydrides; di- or multi-esters, such as the esters of monoalcohols with polycarboxylic acids; diesters which are esters of monohydric alcohols with dicarboxylic acids; diesters which are esters of monobasic acids with polyalcohols such as glycerol; silanes; and mixtures thereof.

In embodiments, any effective amount of the coupling agent is employed to obtain a desired coupling efficiency, e.g., > 50%, or > 60%, or > 70%, or > 80%, or > 90%, or < 99%.

In embodiments, the PILSBC is obtained by introducing the QAS functionality post-polymerization or during the preparation of the SBC precursor by using a monomer containing the QAS, e.g., vinylbenzylamino functionality. In embodiments, the PILSBC is obtained by using at least one monomer containing QAS functionality for polymerization, e.g., vinyl aromatic monomer, substituted vinyl aromatic monomer, or conjugated diene monomer. In addition to using monomers with the QAS functionality, a post-polymerization step is employed to introduce or add more functional group(s), either same or different than existing functional group.

In embodiments, the block D or the block B is functionalized to have the QAS. In embodiments, the block D is functionalized to have the QAS by first halogenating the block D using at least one halogenating agent, e.g., a brominating agent, chlorinating agent, and the like. In embodiments, the SBC precursor is dissolved in a suitable solvent at 50 - 100°C and to this solution, the halogenating agent, e.g., N-bromosuccinimide (NBS) and an initiator are added, and the reaction content is stirred for 20 - 80 min, to obtain a brominated SBC (Br-SBC) precursor. The solvent can be selected from halogenated aromatic compounds, e.g., chlorobenzene. The initiator can be free radical initiators, e.g., azobisisobutyronitrile (AIBN), 4,4'-azobis(4-cyanovaleric acid), 1,1'-azobis(cyclohexanecarbonitrile), 2,2'-azobis(2-methylpropionamidine) dihydrochloride, etc.

In embodiments, at least one unit of the block D is halogenated. Alternatively, in embodiments, all units of the block D are halogenated. In embodiments, the SBC precursor has a degree of halogenation of 20 - 90, or 25 - 85, or 30 - 80, or 30 - 70 mol%, based on total mol of the SBC precursor.

In embodiments, the PILSBC is a bromide ion conducting polymer obtained by quaternization of the Br-SBC precursor with at least a quaternizing agent, e.g., a nitrogen containing heterocyclic compound such as 1-methylimidazole.

In some embodiments, cross-linking is carried out after quaternization of the halogenated-SBC precursor. In other embodiments, quaternization and cross-linking are performed concurrently in-situ. In one embodiment, quaternization and cross-linking are achieved by dissolving the halogenated-SBC precursor in an aromatic hydrocarbon solvent, e.g., toluene, at room temperature and adding the quaternizing agent, the cross-linking agent, and an alcohol into the dissolved halogenated-SBC precursor to obtain a cross-linked PILSBC in liquid form. Non-limiting examples of the alcohol include methanol, ethanol, propanol, and the like. The cross-linked PILSBC can be made into a film by methods known in the art, before the next step, the ion-exchange step can be performed with ionic liquid and lithium salt.

In embodiments, the cross-linked PILSBC has a level of quaternization of up to 100, or 40 - 98, or 50 - 95, or 60 - 90, or 40 - 75 mol%, based on total mol of the halogenated units in the SBC precursor.

(Ionic Liquid (IL))

IL comprises at least a cation and at least an anion. Examples of cations include tetraalkylammonium, di-, tri-, and tetra-alkylimidazolium, alkylpyridinium, dialkyl-pyrrolidinium, dialkylpiperidinium, tetraalkylphosphonium, and trialkylsulfonium. Examples of anions include $PF_6^-$, $ClO_4^-$, $CF_3SO_3^-$, $C_4F_9SO_3^-$, $BF_4^-$, $B(CN)_4^-$, $CH_3BF_3^-$, $CF_3BF_3^-$, $C_2F_5BF_3^-$, $CF_3CO_2^-$, $CF_3SO_3^-$, $N(COCF_3)(SO_2CF_3)^-$, $N(SO_2F)_2^-$, $C(CN)_3^-$, $SCN^-$, $SeCN^-$, $F(HF)_{2.3}^-$, $(CF_3SO_2)_2N^-$, $(C_2F_5SO_2)_2N^-$, $(CF_3SO_2)_3^-$, $C^-$, $AsF_6^-$, $SO_4^{2-}$, $(CN)_2N^-$, and $NO_3^-$. The anion can be based on an organic acid, e.g., $R^3SO_3^-$, $R^4CO_2^-$, $R^5BF_3^-$, wherein $R^3$, $R^4$, and $R^5$ are an alkyl group having 1 to 6 carbon atoms, an alkenyl group having 2 to 6 carbon atoms, an aralkyl group having 7 to 12 carbon atoms, an aralkenyl group having 8 to 14 carbon atoms.

In embodiments, IL is selected from the group consisting of ethylmethylimidazolium bis(trifluoromethanesulfonyl)imide (EMITFSI), ethylmethylimidazolium bis(pentafluoroethanesulfonyl)imide (EMIPFSI), butylmethylimidazolium bis(trifluoromethanesulfonyl)imide (BMITFSI), butylmethylimidazolium bis(pentafluoroethanesulfonyl)imide (BMIPFSI), 1-butyl-3-methylimidazolium tetrafluoroborate ([Bmim][BF4]), N-butyl-N31 methylpyrrolidinium bis(3 trifluoromethanesulfonyl)imide (PYR14+TFSI-I), trihexyl(tetradecyl)phosphoniumdicyanamide $[P_{6,6,6,14}]$[DCA], trihexyl(tetradecyl)phosphoniumbis(trifluoromethanesulfonyl) $[P_{6,6,6,14}]$[TFMS], trihexyl(tetradecyl)phosphonium chloride $[P_{6,6,6,14}]$[Cl], trihexyl(tetradecyl)phosphoniumdodecyl benzenesulfonate $[P_{6,6,6,14}]$[DBS], trihexyl(tetradecyl)phosphoniummethanesulfonate $[P_{6,6,6,14}]$[MS], and mixtures thereof.

In embodiments, the polyelectrolyte composition comprises IL in a suitable amount to obtain a mol ratio of IL to the QAS of the SBC precursor (QAS present in the SBC precursor) of 0.1:1 - 1:1, or 0.15:0.95 - 0.2:0.80, or 0.25:0.75

- 0.3:0.65, or 0.35:0.6 - 0.40:0.55, or > 0.25, or < 0.85.

In embodiments, the polyelectrolyte composition contains IL in an amount of 0.05 - 1 equivalents of IL per 1 equivalent of the QAS of the SBC precursor (QAS present in the SBC precursor). The amount of IL added can be of 0.1 - 0.95, or 0.15 - 0.90, or 0.2 - 0.85, or 0.25 - 0.8, 0.3 - 0.75, or > 0.20, or < 0.95, per 1 equivalent of the QAS of the SBC (QAS present in the SBC precursor).

(Lithium Salt)

Examples of lithium salt include lithium bis(trifluoromethane)sulfonimide (Li-TFSI), lithium hexafluorophosphate (Li-PF6), lithium perchlorate (LiClO4), lithium borofluoride (LiBF4), lithium hexafluoroarsenide (LiAsF6), lithium trifluorometasulfonate (LiCF3SO3), bis-trifluoromethyl sulfonylimide lithium (LiN(CF3SO2)2, lithium bis(oxalato)borate (LiB(C2O4)2), lithium oxalyldifluoroborate (LiBF2C2O4), lithium nitrate (LiNO3), Li-fluoroalkyl-phosphates (LiPF3(CF2CF3)3), lithium bisperfluoroethysulfonylimide (LiBETI), lithium thiocyanate (LiSCN), lithium dicyanamide (LiN(CN)2), Li(CF3SO2)3C, LiN(SO2C2F5)2, LiN(SO2CF3)2, LiN(SO2CF2CF3)2, lithium alkyl fluorophosphates, LiPF3(CF3)3, and mixtures thereof.

In embodiments, the polyelectrolyte composition comprises a salt other than the lithium salt. Examples of such other salts include sodium salts, ammonium salts, magnesium salts, potassium salts, calcium salts, salts based on iron phosphate, salts of silver, salts of barium, salts of lead, and mixtures thereof.

In embodiments, the polyelectrolyte composition comprises the lithium salt in a suitable amount so to obtain a mol ratio of the lithium salt to the QAS of the SBC precursor (QAS present in the SBC precursor) of 5:1 - 20:1, or 6:1 - 18:1, or 8:1 - 15:1, or 10: 1 - 12: 1, or > 8: 1, or < 18: 1.

(Optional Additives)

The polyelectrolyte composition further comprises at least an additive selected from the group consisting of activators, curing agents, crosslinking agents different from diamine based, stabilizers, neutralizing agents, thickeners, coalescing agents, slip agents, release agents, antiozonants, color change pH indicators, plasticizers, tackifiers, film forming additives, dyes, pigments, UV stabilizers, UV absorbers, fillers, other resins, redox couples, flame retardants, viscosity modifiers, wetting agents, deaerators, toughening agents, colorants, heat stabilizers, light stabilizers, lubricants, flow modifiers, drip retardants, antiblocking agents, antistatic agents, processing aids, stress-relief additives, binding agents, and mixtures thereof.

In embodiments, the additive is used in amounts of up to 10 wt.%, or 0.1 - 10, or 0.5 - 5, or 1 - 10, or 1 - 5 wt.%, based on total weight of the polyelectrolyte composition.

In embodiments, the polyelectrolyte composition further comprises a polymer other than the cross-linked PILSBC. Examples of the polymer include poly(acrylamides), polyolefins, polyesters, polyethylene terephthalates, polybutylene terephthalates, poly(butyl succinates), polycarbonates, polyetherimides, polyphenyloxides (PPOs), polystyrenes, poly(methyl methacrylates), poly(n-vinyl-pyrrolidone), polyethylenimene, poly(dimethyl acrylamide), polyether ketone ketone (PEKK), polytetrafluoroethylene (PTFE), polyamide (PA), polyimide (PI), polyacrylate, poly(dimethylsiloxane), and mixtures thereof.

In embodiments, the polymer is added in amounts of 1 - 30, or 2 - 20, or 1 - 15, or 1 - 10, or 5 - 25 wt.%, based on total weight of the polyelectrolyte composition.

(Methods of Preparation of Polyelectrolyte Composition / Film)

In embodiments, the cross-linked PILSBC is mixed with Li salt and IL having a suitable mol ratio, for a suitable period, then made into a film / membrane / coating.

In embodiments, a cross-linked PILSBC film is soaked in a mixture of Li salt and IL having a suitable mol ratio, for a period of 1 - 40 hrs., or 5 - 30 hrs., or 10 - 35 hrs. After soaking the film into the mixture of the Li salt and IL, the Li salt and IL are adsorbed onto the cross-linked PILSBC film, resulting in the formation of a polyelectrolyte film.

In embodiments, the cross-linked PILSBC has a cross-linking percentage of 0.1 - 50%, or 0.5 to 30%, or 1 - 25%, or 0.1 to 20%, or 0.5 to 30%.

In embodiments, Li salt and IL having a suitable mol ratio is added directly to a cross-linked PILSBC in liquid form, then the solution is made into a film by any of solvent casting, coating, dipping, etc., to obtain a film after evaporation of any added solvent.

Examples of solvents for the preparation of polyelectrolyte composition and film thereof include acetone, acetyl acetone, acetic acid, acetonitrile, benzonitrile, 1-butanol, 2-butanol, 2-butanone, t-butyl alcohol, benzyl alcohol, cyclohexane, cyclohexanol, cyclohexanone, dichloromethane, 1,2-dichloroethane, diethylene glycol, diethyl ether, diglyme (diethylene glycol dimethyl ether), 1,2-dimethoxy-ethane (glyme, DME), 1,4-dioxane, methanol, ethanol, 1-propanol, 2-propanol (isopropanol), methyl acetate, ethyl acetate, ethyl acetoacetate, butyl acetate, ethylene glycol, glycerin, heptane, hexamethylphosphoramide (HMPA), hexamethylphosphoroustriamide (HMPT), hexane, methyl t-butyl ether (MTBE), dimethylsulfoxide (DMSO), methyl ethyl ketone (MEK), dimethylformamide (DMF), dimethylacetamide (DMAc), methyl propyl ketone (MPK), dimethylphthalate, nitromethane, pentane, petroleum ether, pyridine, toluene, aniline, triethyl amine, diethylamine, o-xylene, m-xylene, p-xylene, naphtha, di-n-butylphthalate, 3-pentanone, chloroform, bis(2-methoxyethyl) ether, ethyl benzoate, tetrahydrofuran, anisole, chlorobenzene, N,N-dimethylaniline, carbon disulfide, carbon tetrachloride, and mixtures thereof.

In embodiments, the polyelectrolyte composition is made into films having a thickness of 10 - 200 μm, or 15 - 180 μm, or 20 - 150 μm, or 25 - 100 μm, or 10 - 80 μm, or 15 - 50 μm.

In embodiments, the polyelectrolyte composition is deposited on an electrode (anode and / or cathode) by any of solvent casting, coating, dipping process, etc., to obtain a film of polyelectrolyte composition on the electrode. In this case, the film coated electrode employed in assembling a Li battery or cell.

(Properties of PolyElectrolyte Composition / Film)

In embodiments, the Li salt and IL forms a conducting phase in the polyelectrolyte composition. In embodiments, the polyelectrolyte composition has a volume fraction of the conducting phase of 0.15 - 0.85, or 0.25 - 0.80, or 0.35 - 0.80, or 0.5 - 0.8, or 0.52 - 0.78, or 0.54 - 0.75, or 0.55 - 0.72, or 0.58 - 0.7, based on total volume of the polyelectrolyte composition; alternatively, a volume fraction of the cross-linked PILSBC in the polyelectrolyte composition is from 0.20 - 0.50, or 0.22 - 0.48, or 0.25 - 0.46, or 0.28 - 0.45, or 0.30 - 0.42, based on total volume of the polyelectrolyte composition.

The volume fraction of the conducting phase can be computed from the volume(s) of the Li salt, IL, and the cross-linked PILSBC, each volume value is computed based on the amounts (in weight) of each of Li salt, IL, and the cross-linked PILSBC, and the respective density value.

A film obtained from the polyelectrolyte composition can selectively transport anions, water, and gases, easy for handling, shaping, and forming into a pattern. The film is ionically conductive and electrically non-conductive.

In embodiments, a film when used in Li-ion batteries, exhibits suppression growth of Li dendrimers, and helps avoiding short out. The film can simplify the process of assembling Li-ion battery, obviating a spacer to separate electrodes. Due to the solid nature of electrolytes (i.e., polyelectrolyte composition), Li-ion batteries can be prepared into variety of shapes and forms, and a rigid case is not needed to carry liquid electrolytes.

In embodiments, the film has an ionic conductivity at 30°C of $1.50 \times 10^{-9}$ - $2.0 \times 10^{-4}$, or $2.0 \times 10^{-9}$ - $1.0 \times 10^{-4}$, or $8.0 \times 10^{-8}$ - $9.0 \times 10^{-5}$, or $6.0 \times 10^{-8}$ - $9.0 \times 10^{-5}$ or $5.0 \times 10^{-8}$ - $8.5 \times 10^{-5}$, $2.5 \times 10^{-6}$ - $1.0 \times 10^{-3}$, or $5.0 \times 10^{-6}$ - $1.5 \times 10^{-3}$, or $1.0 \times 10^{-5}$ - $2.0 \times 10^{-3}$, or > $2.0 \times 10^{-6}$, or > $4.0 \times 10^{-6}$ S $cm^{-1}$.

(Properties of Li-Ion Battery Containing PolyElectrolyte Film)

The film of polyelectrolyte composition when used in a battery / cell shows excellent discharge capacity.

In embodiments, a Li-ion battery containing the polyelectrolyte film has an electrochemical stability of 1 - 12 V, or 2 - 10 V, or 2.5 - 8V, or 3 - 6 V, or 3.5 - 5.5V, or 4 - 7V, or > 4V, or < 10 V. Electrochemical stability refers to a control of an open circuit voltage of the polymer electrolyte.

In embodiments, the Li-ion battery has a retention capacity of > 80%, or > 85%, or > 90%, or > 95%, or > 97%, or < 99.5%, after at least 1000 charge / discharge cycles at room temperature with respect to the first cycle. The retention capacity of the Li-ion battery refers to a full charge or discharge capacity of a battery obtained after the battery is used for a certain period or left unused for a prolonged period.

(Applications)

The polyelectrolyte composition can be used in the preparation of anionic exchange membrane (AEM), solid ionic conductors, powerful dispersant and stabilizer, actuator, absorbent, precursor for carbon materials, electrolyte for batteries (Li-ion or Na-ion), membrane for fuel cells, membrane for capacitive deionization (CDI), membrane for electrolysis cells, membrane for STP (sewage treatment plan), pervaporation membrane, reverse osmosis membrane, forward osmosis membrane, energy recovery membrane, evaporative cooling applications, humidifiers, carrier / dispersant for inorganic salts, rheology modifier, anti-fungal composition, anti-bacterial composition, etc.

In embodiments, the film has applications in an electrolyzer to conduct protons from the anode to the cathode while insulating the electrodes electrically. The electrolyzer containing the film electrolyzes water to generate oxygen gas and hydrogen gas.

(Examples)

The following examples are intended to be non-limiting.

Ionic conductivity is measured by electrochemical impedance spectroscopy (EIS) with an impedance analyzer combined with potentiostat / galvanostat. A film sample of polyelectrolyte composition in a circular shape having a size of about 1.13 $cm^2$ is placed between two stainless steel solid blocking electrodes encapsulated by a Teflon holder. For temperature dependent ionic conductivity measurement, heat from 20 to 100°C is applied to stainless steel blocking electrodes by heating tape. Impedance spectra are collected for frequencies in the range of 1 MHz to 0.1 Hz with an AC (alternate current) perturbation of 10 mV at open circuit potential at a temperature range from 30 to 100°C. Films are held at each temperature for 1 hr. to reach equilibrium, followed by five measurements at equilibrium. The ionic conductivity is calculated by using equation: $\sigma$ = L/(AR), where L is the thickness of the film, A is the cross-sectional area of the blocking electrode (ca. 1.2161 $cm^2$), and R is the resistance of the film determined by the equivalent circuit regression of the Nyquist data.

The components used in examples include:

SBC-1, SBC-2, and SBC-3 are styrene-ethylene/propylene-para-methylstyrene-ethylene/propylene-styrene (S-EP-pMS-EP-S) block copolymers with varying molecular weights of each block.
SBC-4 is a styrene-para-methylstyrene-styrene (S-pMS-S) block copolymer.
SBC-5 is a coupled styrene-para-methylstyrene-styrene $(S\text{-}pMS\text{-}S)_nX$.

(Example 1)

Halogenation of the block D of the SBC precursor. The block D was brominated by dissolving about 10 g of SBC precursor in about 190 g of chlorobenzene solvent to prepare a mixture. The mixture was heated at 70°C for 30 minutes and about 1.5 g of N-bromosuccinimide and 0.06 g of azobisisobutyronitrile (AIBN) were added dropwise with stirring. The reaction was continued for another 30 minutes to obtain brominated block D or brominated SBC (Br-SBC) precursor. Functionalization of the Br-SBC precursor was conducted by dissolving in a suitable amount in about 40 ml of toluene to obtain a homogenous solution. To this solution, 1-methylimidazole in a suitable amount was added alone or along with the cross-linking agent 1,4-bis(imidazol-1-yl)-butane, and methanol at room temperature (25°C) to obtain the PILSBC with or without cross-linking. Compositions of various PILSBC's (without cross-linking) are shown in table 1. The PILSBC-1 is cross-linked to obtain a cross-linked sample with varying cross-linking percentages as presented in table 1a.

The cross-linking percentage (z) was calculated by using equation:

$$z\,(\%) = \frac{[\text{cross-inking agent}]\,(mol)}{[brominated\ D\ block]\,(mol)} * 100$$

Table 1

| PILSBC | Vinyl content before hydrogenation (wt.%) | Mol. wt. of block A (kg/mol) | Mol. wt. of block B (kg/mol) | Mol. wt. of block D (kg/mol) | Mol. wt. of block B (kg/mol) | Mol. wt. of block A (kg/mol) | Total mol. wt. of block A (kg/mol) | Total mol. wt. of block B (kg/mol) | Mol. Wt. of SBC (kg/mol) |
|---|---|---|---|---|---|---|---|---|---|
| PILSBC-1 (S-EP-pMS-EP-S) | 8.9 | 33.6 | 2.6 | 41.2 | 2.6 | 33.6 | 62.2 | 5.2 | 113.6 |
| PILSBC-2 (S-EP-pMS-EP-S) | 8.2 | 27 | 11.6 | 38.6 | 11.6 | 27 | 54 | 23.2 | 115.8 |
| PILSBC-3 (S-EP-pMS-EP-S) | - | 22 | 2 | 44 | 2 | 22 | 44 | 4 | 92 |

| | | | | | | | | | |
|---|---|---|---|---|---|---|---|---|---|
| PILSBC-4 (S-pMS-S) | - | 20.2 | - | 50.9 | - | 27.7 | 47.9 | - | 98.8 |
| PILSBC-5 ((S-pMS-S)nX) | - | 18.7 | - | 44.3 | - | 18.7 | 37.4 | - | 81.7 |

Table 1a

| PILSBC | Cross-linking percentages (%) |
|---|---|
| Cross-linked PILSBC-1 | 1 |
| Cross-linked PILSBC-1.5 | 5 |
| Cross-linked PILSBC-1.10 | 10 |
| Cross-linked PILSBC-1.20 | 20 |

(Example 3)

Preparation of polyelectrolyte compositions and films thereof. PILSBC (without cross-linking), Li salt, and IL liquid (in DMAc) were mixed in suitable amounts in DMAc and a solution of polyelectrolyte composition was obtained. Pre-film was obtained by casting polyelectrolyte composition onto a silicon coated PET film and allowed to evaporate maximum solvent. Dried pre-film (containing PILSBC without cross-linking) was then dissolved in DMAc to obtain concentration of about 20 %. To this solution, Li salt (Li-TFSI) and IL (EMI-TFSI) were added to obtain suitable Li salt and IL concentrations (ternary solution). The mol ratio of Li salt to block D containing QAS (in PILSBC) was kept constant at 0.1. The mol ratio of IL to block D containing QAS was varied (termed as "r") as shown in table 2. The ternary solution was used to obtain a polyelectrolyte film by casting ternary solution onto a silicon coated PET film via doctor blade using an automatic film applicator. The film was dried under vacuum at ambient temperature for about 24 hours and then at 120°C for about 48 hours to remove residual solvent to obtain film of polyelectrolyte composition.

(Example 3a)

Preparation of polyelectrolyte composition using cross-linked PILSBC-1. Films of cross-linked PILSBC-1 were soaked in a mixture of Li salt and IL having a suitable mol ratio for a period of about 30 hours to obtain films of polyelectrolyte composition containing cross-linked PILSBC.

Ionic conductivity measured for different polyelectrolyte compositions are presented in tables 2, and 3.

Table 2

| Polyelectrolyte Composition with PILSBC | "r" mol ratio of IL to block D containing QAS | Film thickness (μm) | Volume of conducting phase | Ionic conductivity S $cm^{-1}$ (at 30°C) |
|---|---|---|---|---|
| PILSBC-1 | 0.2 | 44 | 0.644 | $3.9 \times 10^{-8}$ |
| | 0.3 | 41 | 0.652 | $4.00 \times 10^{-7}$ |
| | 0.5 | 57 | 0.666 | $1.10 \times 10^{-5}$ |
| | 0.7 | 63 | 0.682 | $2.20 \times 10^{-5}$ |
| | 0.9 | 70 | 0.696 | $8.20 \times 10^{-5}$ |

Table 3

| Polyelectrolyte Composition with cross-linked PILSBC-1 | Ionic conductivity S $cm^{-1}$ (at 30°C) |
|---|---|
| Cross-linked PILSBC-1-Li-1.1 | $3.5 \times 10^{-3}$ |
| Cross-linked PILSBC-1-Li-1.5 | $2.6 \times 10^{-3}$ |
| Cross-linked PILSBC-1-Li-1.10 | $2.0 \times 10^{-3}$ |

(continued)

| Polyelectrolyte Composition with cross-linked PILSBC-1 | Ionic conductivity S $cm^{-1}$ (at 30°C) |
|---|---|
| Cross-linked PILSBC-1-Li-1.20 | $1.00141 \times 10^{-3}$ |

(Example 4)

Preparation of coin cell assembly with polyelectrolyte films. A cathode was prepared by dispersing 80 wt.% of NMC811 (a composition with 80 wt.% of nickel, 10 wt.% of manganese, and 10 wt.% of cobalt), 10 wt.% of carbon black, and 10 wt. % of PVDF in N-methyl-2-pyrrolidone and casting this cathode slurry onto a C-Al foil (copper-Al foil) using the film applicator. The cathode was dried at ambient conditions overnight followed by drying at 120°C under vacuum for about 6 hours to remove the residual solvent and obtain the cathode. Li / polyelectrolyte film / NMC811 cells were assembled by placing the polyelectrolyte film (containing cross-linked PILSBC) between Li metal (acting as anode) and the cathode in the cell cases and pressing them by an electric crimper. A small amount of (about 1-2 ml) 1 molar of Li salt and IL was added to each electrode (cathode and anode) to improve contact between electrodes and polyelectrolyte film during the assembly. The cell was allowed to rest for about 24 hours to form a stable interface between the polyelectrolyte film and each electrode.

Battery cycling experiments on Li / polyelectrolyte / NMC811 coin cells were performed between 3.0 and 4.2 V at room temperature at a C-rate of C/20 where C is the theoretical capacity of cathode material. Constant current (CC) charging that uses a constant current for charging the battery was used for charging process. Constant current constant voltage (CC-CV) charging where a predetermined voltage is used to charge the battery followed by CC charging (e.g., 4.2 V for 1 hr.) was used as formation prior to cycling. Table 4 shows discharge capacity of cell obtained by using crimping pressure of 1000 psi and with capacity of battery charging of C/n, wherein n is 10 hours. Table 5 presents discharge capacity of cell as a function of crimping pressure using the film of cross-linked PILSBC-1 and "r" value being 0.9.

Table 4

| Polyelectrolyte Composition with cross-linked PILSBC | Cycles | Discharge capacity [mAh/g] |
|---|---|---|
| Cross-linked PILSBC-Li-1.1 | 5 | 135.342 |
| | 10 | 131.862 |
| | 15 | 134.657 |
| | 20 | 135.883 |
| | 25 | 134.362 |
| | 30 | 134.804 |
| | 35 | 132.108 |
| | 40 | 130.587 |
| Cross-linked PILSBC-Li-1.5 | 5 | 130.637 |
| | 10 | 131.48 |
| | 15 | 132.706 |
| | 20 | 131.187 |
| | 25 | 128.098 |
| | 30 | 124.226 |

(continued)

| Polyelectrolyte Composition with cross-linked PILSBC | Cycles | Discharge capacity [mAh/g] |
|---|---|---|
| Cross-linked PILSBC-Li-1.10 | 5 | 125.147 |
| | 10 | 130.294 |
| | 15 | 126.421 |
| | 20 | 125.687 |
| | 25 | 127.696 |
| | 30 | 125.785 |
| | 35 | 125.442 |
| | 40 | 125.097 |
| Cross-linked PILSBC-Li-1.20 | 5 | 127.451 |
| | 10 | 118.824 |
| | 15 | 115.686 |
| | 20 | 120.784 |
| | 25 | 120.784 |
| | 30 | 116.471 |
| | 35 | 114.51 |
| | 40 | 114.51 |

Table 5

| Crimping pressure (psi) | Cycles | Discharge capacity [mAh/g] |
|---|---|---|
| 1000 | 5 | 154.251 |
| | 10 | 151.351 |
| | 15 | 149.266 |
| | 20 | 144.328 |
| | 25 | 141.02 |
| | 30 | 140.563 |
| 1500 | 5 | 139.595 |
| | 10 | 142.801 |
| | 15 | 135.016 |
| | 20 | 133.337 |
| | 25 | 135.729 |
| | 30 | 132.829 |
| | 35 | 128.707 |
| | 40 | 136.39 |
| 1700 | 5 | 150.993 |
| | 10 | 142.801 |
| | 15 | 133.792 |

(Example 5)

Procedure of example 4 was repeated by replacing NMC811 with Li as a cathode. The obtained cell is a symmetric Li / polyelectrolyte / Li. Galvanostatic stripping / plating cycling of the symmetric cell was evaluated using a battery tester (4200 M, MACCOR) at room temperature and at a constant current density of 0.02 mA $cm^{-1}$. The resistances between polyelectrolyte film and Li electrodes (cathode and anode) were recorded by an electrochemical impedance spectroscopy (EIS) for every $10^{th}$ polarization cycle at a frequency ranging from 100 kHz to 1 Hz with the amplitude of the voltage disturbance of 10 mV.

(Example 6)

Deposition of film of polyelectrolyte composition on Li electrode. Procedure of examples 3 was repeated except a mixture solvents (DMAc : toluene in 1:1 wt. ratio) was used and deposition of film was performed on Li electrode (either anode or cathode) instead of solid support. Li electrode with the film was then used to assemble cell using crimping pressure of 1500 psi for further tests. Table 6 shows overvoltage of cell as a function of test time.

Table 6

| Test time (in hours) | Overvoltage | Test time (in hours) | Overvoltage | Test time (in hours) | Overvoltage |
|---|---|---|---|---|---|
| 0 | 0.02998 | 220 | 0.07774 | 420 | 0.08782 |
| 20 | 0.07668 | 240 | 0.08934 | 440 | 0.08492 |
| 40 | 0.08415 | 260 | 0.09285 | 460 | 0.08080 |
| 60 | 0.09041 | 280 | 0.09346 | 480 | 0.07713 |
| 80 | 0.09529 | 300 | 0.10231 | 500 | 0.06432 |
| 100 | 0.10262 | 320 | 0.11055 | 520 | 0.05241 |
| 120 | 0.09468 | 340 | 0.10521 | 540 | 0.03624 |
| 140 | 0.09483 | 360 | 0.09514 | 560 | 0.21447 |
| 160 | 0.09941 | 380 | 0.09697 | - | - |
| 180 | 0.8934 | 400 | 0.9514 | - | - |
| 200 | 0.08614 | - | - | - | - |

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

**1.** A polyelectrolyte composition comprising:

a) a polyionic multiblock polymer containing a styrenic block copolymer precursor with at least a quaternary ammonium salt, wherein the styrenic block copolymer precursor comprises:

a block D derived from a substituted vinyl aromatic monomer, having a molecular weight ($M_p$) of 10 to 100 kg/mol,
a block A derived from a vinyl aromatic monomer, having a molecular weight ($M_p$) of 5 to 100 kg/mol, and optionally a block B derived from a conjugated diene monomer, having a molecular weight ($M_p$) of 1 to 40 kg/mol;

b) a cross-linking agent comprising a compound having at least two amino groups, wherein the cross-linking agent is present in an amount of 0.05 to 20 mol%, based on total mol of the quaternary ammonium salt;

c) at least one salt selected from lithium salt, sodium salt, and mixtures thereof; and
d) an ionic liquid,

wherein a film obtained from the polyelectrolyte composition has an ionic conductivity at 30°C of greater than 2.0 x $10^{-6}$ S $cm^{-1}$.

**2.** The polyelectrolyte composition of claim 1, wherein the cross-linking agent is present in an amount of 0.1 to 15 mol%, based on total mol of the quaternary ammonium salt.

**3.** The polyelectrolyte composition of claim 1, wherein the cross-linking agent is selected from the group consisting of 1,4-bis(imidazol-1-yl)-butane, 1,4-Bis(2-methyl-1H-imidazol-1-yl)butane, 1,4-bis(2-phenylimidazol)butane, 1,6-diimidazolehexane, 1,6-bis(2-ethylimidazolyl)butane, 1,6-bis(2-phenylimidazol)butane, 1,8-diimidazoleoctane, 1,8-bis(2-ethylimidazolyl)butane, 1,8-bis(2-phenylimidazol)butane, 1,10-diimidazoledecane, 1,10-bis(2-ethylimidazolyl)butane, and 1,10-bis(2-phenylimidazol)butane, and mixtures thereof.

**4.** The polyelectrolyte composition of claim 1, wherein the polyelectrolyte composition has a conducting phase containing a combination of the lithium salt and the ionic liquid, and wherein a volume fraction of the conducting phase is 0.15 to 0.85, based on total volume of the polyelectrolyte composition.

**5.** The polyelectrolyte composition of any of claims 1-4, wherein the film has an ionic conductivity at 30°C of 2.5 x $10^{-6}$ to 1.0 x $10^{-3}$ S $cm^{-1}$.

**6.** The polyelectrolyte composition of any of claims 1-4, wherein a mol ratio of the ionic liquid to the quaternary ammonium salt is 0.1:1 to 1:1, and a mol ratio of the lithium salt to the quaternary ammonium salt is 5:1 to 20:1.

**7.** The polyelectrolyte composition of any of claims 1-4, wherein the styrenic block copolymer precursor has a polystyrene content of 5 to 70 wt.%, based on total weight of the SBC precursor.

**8.** The polyelectrolyte composition of any of claims 1-4, wherein the styrenic block copolymer precursor has a molecular weight ($M_p$) of 20 to 400 kg/mol.

**9.** The polyelectrolyte composition of any of claims 1-4, wherein:

the substituted vinyl aromatic monomer is selected from the group consisting of ortho-methyl styrene, ortho-ethyl styrene, ortho-n-propyl styrene, ortho-iso-propyl styrene, ortho-n-butyl styrene, ortho-iso-butyl styrene, ortho-sec-butyl styrene, ortho-tert-butyl styrene, ortho-decyl styrene, isomers of ortho-dodecyl styrene, para-methyl styrene, para-ethyl styrene, para-n-propyl styrene, para-iso-propyl styrene, para-n-butyl styrene, para-iso-butyl styrene, para-sec-butyl styrene, para-tert-butyl styrene, para-decyl styrene, isomers of para-dodecyl styrene, ortho,para-dimethyl styrene, ortho,para-diethyl styrene, ortho,para-di(n-propyl) styrene, ortho,para-di(iso-propyl) styrene, ortho,para-di(n-butyl) styrene, ortho,para-di(iso-butyl) styrene, ortho,para-di(sec-butyl) styrene, ortho,para-di(tert-butyl) styrene, ortho,para-didecyl styrene, isomers of ortho,para-didodecyl styrene, isomers of vinyl toluene, vinyl xylene, 1,1-vinyl biphenyl, vinyl naphthalene, vinyl anthracene, and mixtures thereof;
the vinyl aromatic monomer is selected from the group consisting of styrene, alpha-methylstyrene, and mixtures thereof; and
wherein the styrenic block copolymer precursor has a configuration selected from A-D, D-A-D, A-D-A, $(A-D)_nX$, $(D-A-D)_nX$, $(A-D-A)_nX$, and mixtures thereof, wherein X is a residue of a coupling agent, and n is from 2 to 30.

**10.** The polyelectrolyte composition of any of claims 1-4, wherein the styrenic block copolymer precursor further comprises the block B, and wherein the conjugated diene monomer is selected from the group consisting of 1,3-butadiene, isoprene, 2,3-dimethyl-1,3-butadiene, 1-phenyl-1,3-butadiene, 1,3-pentadiene, 1,3-hexadiene, 3-butyl-1,3-octadiene, myrcene, farnesene, 1,3-cyclohexadiene, piperylene, and mixtures thereof; and wherein the styrenic block copolymer precursor has a configuration selected from D-B, D-B-D, D-B-A, D-A-B, A-D-B, $(D-B)_nX$, $(D-B-D)_nX$, $(D-B-A)_nX$, $(D-A-B)_nX$, $(A-D-B)_nX$, A-B-D, A-D-B, A-B-D-B', D-B-A-B', A-B-D-A, A-D-B-A, A-B-D-B'-A, A-D-B-D-A, A-B-A-D-A, A-D-A-B-A, A-B-D-B'-D, A-B-D-A-D, A-D-B-A-D, A-B-D-A-B', A-D-B-A-B', $(A-B-D)_nX$, $(A-D-B)_nX$, $(A-B-D-B')_nX$, $(A-B-D-A)_nX$, $(A-D-B-A)_nX$, $(B-A-B'-D)_nX$, and mixtures thereof, wherein X is a residue of a coupling agent, n is from 2 to 30, and blocks B and B' are same or different and each independently derived from the conjugated diene monomer; and wherein, after hydrogenation, each block B and B' independently has a hydrogenation level

of greater than 80 mol%, based on total mol of the polymerized conjugated diene monomer in each block B and B'.

**11.** The polyelectrolyte composition of claim 10, wherein each block B and B', before hydrogenation, has a vinyl content of 5 to 35 wt.%, based on weight of the polymerized conjugated diene monomer in each block B and B'.

**12.** The polyelectrolyte composition of any of claims 1-4, wherein each block A and D independently has a hydrogenation level of less than 30 mol%, based on mol of the polymerized monomer in each block A and D; and wherein the block D has at least a quaternary ammonium salt.

**13.** The polyelectrolyte composition of any of claims 1-4, wherein the styrenic block copolymer precursor further comprises the block B, and wherein each block A has a molecular weight ($M_p$) of 10 to 50 kg/mol; each block B has a molecular weight ($M_p$) of 2 to 20 kg/mol; and each block D has a molecular weight ($M_p$) of 15 to 60 kg/mol.

**14.** The polyelectrolyte composition of any of claims 1-4, wherein the ionic liquid is selected from the group consisting of ethylmethylimidazolium bis(trifluoromethanesulfonyl)imide (EMITFSI), ethylmethylimidazolium bis(pentafluoroethanesulfonyl)imide (EMIPFSI), butylmethylimidazolium bis(trifluoromethanesulfonyl)imide (BMITFSI), butylmethylimidazolium bis(pentafluoroethanesulfonyl)imide (BMIPFSI), 1-butyl-3-methylimidazolium tetrafluoroborate ([Bmim][BF4]), N-butyl-N31 methylpyrrolidinium bis(3 trifluoromethanesulfonyl)imide (PYR14+TFSI-I), trihexyl(tetradecyl)phosphoniumdicyanamide [$P_{6,6.6,14}$][DCA], trihexyl(tetradecyl)phosphoniumbis(trifluoromethanesulfonyl) [$P_{6,6,6,14}$][TFMS], trihexyl(tetradecyl)phosphonium chloride [$P_{6,6,6,14}$][Cl], trihexyl(tetradecyl)phosphoniumdodecyl benzenesulfonate [$P_{6,6,6,14}$][DBS], trihexyl(tetradecyl)phosphoniummethanesulfonate [$P_{6,6,6,14}$][MS], and mixtures thereof; and wherein the lithium salt is selected from the group consisting of bis(trifluoromethane)sulfonimide (Li-TFSI), lithium hexafluorophosphate (Li-PF6), lithium perchlorate (LiClO4), lithium borofluoride (LiBF4), lithium hexafluoroarsenide (LiAsF6), lithium trifluoro-metasulfonate (LiCF3SO3), bis-trifluoromethyl sulfonylimide lithium (LiN(CF3SO2)2, lithium bis(oxalato)borate (LiB(C2O4)2), lithium oxalyldifluoroborate (LiBF2C2O4), lithium nitrate (LiNO3), Li-fluoroalkyl-phosphates (LiPF3(CF2CF3)3), lithium bisperfluoroethysulfonylimide (LiBETI), lithium thiocyanate (LiSCN), lithium dicyanamide (LiN(CN)2), Li(CF3SO2)3C, LiN(SO2C2F5)2, LiN(SO2CF3)2, LiN(SO2CF2CF3)2, lithium alkyl fluorophosphates, LiPF3(CF3)3, and mixtures thereof.

**15.** A lithium ion battery comprising:

the film obtained from the polyelectrolyte composition of any of claims 1-4 as an electrolyte, or
the film obtained from the polyelectrolyte composition of any of claims 1-4 as deposited on an anode or on a cathode of the lithium ion battery by any of casting, coating, dipping process;

wherein the lithium ion battery has retention capacity of greater than 80% after at least 1000 charge / discharge cycles at room temperature.

Europäisches Patentamt
European Patent Office
Office européen des brevets

# EUROPEAN SEARCH REPORT

Application Number
EP 23 17 3490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 2015/221980 A1 (HILLMYER MARC A [US] ET AL) 6 August 2015 (2015-08-06)<br>* claims 1-4,6,8; examples * | 1,4,9, 14,15<br>2,3,5-8, 10-13 | INV.<br>H01M10/0525<br>H01M10/0565<br>H01M10/0566 |
| Y<br>A | US 10 022 680 B2 (KRATON POLYMERS US LLC [US]) 17 July 2018 (2018-07-17)<br>* Chapter 4;<br>column 1, lines 19-25; examples *<br>* column 2, lines 3-7 * | 1,4,9, 14,15<br>2,3,5-8, 10-13 | |
| A | CN 109 786 819 A (BYD CO LTD) 21 May 2019 (2019-05-21)<br>* claims 1-3,10-12 * | 1-15 | |
| A | JP 2005 085638 A (NIPPON SODA CO) 31 March 2005 (2005-03-31)<br>* claims 1,2,9,10; examples * | 1-15 | |

TECHNICAL FIELDS SEARCHED (IPC)
H01M

The present search report has been drawn up for all claims

1

| Place of search | Date of completion of the search | Examiner |
|---|---|---|
| Munich | 18 October 2023 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 17 3490

This annex lists the patent family members relating to the patent documents cited in the above-mentioned European search report. The members are as contained in the European Patent Office EDP file on
The European Patent Office is in no way liable for these particulars which are merely given for the purpose of information.

18-10-2023

| Patent document cited in search report | Publication date | Patent family member(s) | Publication date |
|---|---|---|---|
| US 2015221980 A1 | 06-08-2015 | CN 105377407 A | 02-03-2016 |
| | | EP 3003539 A1 | 13-04-2016 |
| | | JP 6603210 B2 | 06-11-2019 |
| | | JP 2016524794 A | 18-08-2016 |
| | | KR 20160012206 A | 02-02-2016 |
| | | US 2015221980 A1 | 06-08-2015 |
| | | US 2022123362 A1 | 21-04-2022 |
| | | WO 2014190278 A1 | 27-11-2014 |
| US 10022680 B2 | 17-07-2018 | BR 112015016565 A2 | 11-07-2017 |
| | | BR 122015019867 A2 | 27-08-2019 |
| | | CN 104936990 A | 23-09-2015 |
| | | CN 105061703 A | 18-11-2015 |
| | | CN 107056971 A | 18-08-2017 |
| | | EP 2943514 A1 | 18-11-2015 |
| | | JP 6273236 B2 | 31-01-2018 |
| | | JP 6336483 B2 | 06-06-2018 |
| | | JP 6487470 B2 | 20-03-2019 |
| | | JP 2016027157 A | 18-02-2016 |
| | | JP 2016509098 A | 24-03-2016 |
| | | JP 2017095730 A | 01-06-2017 |
| | | KR 20150103760 A | 11-09-2015 |
| | | KR 20150105394 A | 16-09-2015 |
| | | TW 201434870 A | 16-09-2014 |
| | | TW 201619210 A | 01-06-2016 |
| | | US 2014197032 A1 | 17-07-2014 |
| | | WO 2014110534 A1 | 17-07-2014 |
| CN 109786819 A | 21-05-2019 | NONE | |
| JP 2005085638 A | 31-03-2005 | JP 4312550 B2 | 12-08-2009 |
| | | JP 2005085638 A | 31-03-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7449518 B